**Europäisches Patentamt**

**European Patent Office**

**Office européen des brevets**

(11) Numéro de publication : **0 454 582 B1**

(12)

# FASCICULE DE BREVET EUROPEEN

(45) Date de publication du fascicule du brevet :
**28.12.94 Bulletin 94/52**

(51) Int. Cl.$^5$ : **G01S 3/14, H01Q 21/14**

(21) Numéro de dépôt : **91401099.6**

(22) Date de dépôt : **25.04.91**

(54) **Système d'antenne de radiogoniométrie à couverture omnidirectionnelle.**

(30) Priorité : **27.04.90 FR 9005386**

(43) Date de publication de la demande :
**30.10.91 Bulletin 91/44**

(45) Mention de la délivrance du brevet :
**28.12.94 Bulletin 94/52**

(84) Etats contractants désignés :
**DE FR GB**

(56) Documents cités :
**DE-A- 2 525 486
FR-A- 2 163 332
US-A- 2 720 648
US-A- 2 953 782
US-A- 4 528 567
US-A- 4 636 796**

(56) Documents cités :
**IEEE TRANSACTIONS ON ANTENNAS AND PROPAGATION, vol. AP-31, no. 3, mai 1983, pages 451-455, IEEE, New York, US; H.M. ELKAMCHOUCHI: "Cylindrical and three-dimensional corner reflector antennas"**

(73) Titulaire : **SOCIETE TECHNIQUE D'APPLICATION ET DE RECHERCHE ELECTRONIQUE
12 et 14 avenue Carnot
F-91300 Massy (FR)**

(72) Inventeur : **Jelloul, Mostafa
25 rue d'Amblainvilliers
F-91370 Verrieres-le-Buisson (FR)**

(74) Mandataire : **Ahner, Francis et al
CABINET REGIMBEAU
26, avenue Kléber
F-75116 Paris (FR)**

## Description

La présente invention concerne un système d'antenne de radiogoniométrie comportant quatre éléments rayonnants identiques répartis uniformément sur un cercle autour d'un mât conducteur, et destiné à déterminer l'angle d'incidence de la direction de propagation d'une onde électromagnétique plane avec une direction de référence.

L'invention trouve une application avantageuse dans le domaine de la radiolocalisation dans toutes les gammes de radiofréquence, et, en particulier, dans les gammes HF, VHF et UHF. D'une manière générale, le système d'antenne de l'invention s'applique à la détection et à la surveillance et, en particulier, aux dispositifs anti-collision, entre avions par exemple, et d'alerte. Il peut être installé fixe au sol ou porté par un mobile terreste, un navire ou un aéronef.

La radiogoniométrie appliquée à la radiolocalisation repose classiquement sur deux techniques connues, la technique de Watson-Watt avec antenne Adcock et la technique dite à effet Doppler.

La première de ces techniques exploite l'information d'amplitude, en ce sens que le rapport des amplitudes des signaux issus de deux paires orthogonales de dipôles fournit approximativement la tangente de l'angle d'incidence cherché. Cette méthode est peu précise en raison de l'erreur octantale, erreur sensible par ailleurs à l'angle d'élévation de l'onde incidente.

La technique à effet Doppler, qui requiert un nombre d'élément rayonnants important (16 ou 32 par exemple, voire plus), présente une faible sensibilité du fait du couplage entre les éléments rayonnants et surtout nécessite une commutation cyclique rapide des éléments rayonnants. D'autre part, l'électronique d'acquisition et de traitement qui est relativement complexe doit être précise et stable dans le temps. En outre, cette technique nécessite une antenne auxiliaire de référence afin en particulier d'éliminer la modulation de phase souvent présente dans les signaux à localiser.

Il existe d'autres techniques basées sur le principe connu de l'interférométrie. Mais elles requièrent dans tous les cas la commutation de plusieurs antennes.

Aussi, le problème technique à résoudre par l'objet de la présente invention est de réaliser un système d'antenne conforme au préambule qui ne comporterait pas de dispositif de commutation, offrirait une bonne sensibilité et une bonne précision de localisation, et serait peu emcombrant.

La solution au problème technique posé consiste, selon la présente invention, en ce que lesdits éléments rayonnants sont associés en une première et une deuxième paires de deux éléments rayonnants opposés et inversés l'un par rapport à l'autre, et en ce que ledit système d'antenne comporte une unité de traitement comprenant, d'une part, un premier diviseur de puissance par deux adapté recevant les signaux déphasés de 180° fournis par la première paire d'éléments rayonnants sur ses sorties divisées et un deuxième diviseur de puissance par deux adapté, identique au premier, recevant les signaux déphasés de 180° fournis par la deuxième paire d'éléments rayonnants sur ses sorties divisées, et, d'autre part, une jonction hybride du type 3dB-90° recevant les signaux délivrés par les sorties non-divisées desdits diviseurs de puissance par deux adaptés, et fournissant en sortie deux signaux dont la différence de phase est donnée par $2\theta - \pi/2$ à une constante près.

Comme on le verra plus en détail plus loin, le récepteur d'antenne repose sur le principe de fonctionnement suivant. Si $\theta$ est l'angle d'incidence recherché pris par rapport à un axe de référence, par exemple la droite joignant les deux éléments rayonnants d'une même paire, les signaux issus des deux diviseurs de puissance par deux adaptés sont l'un proportionnel à $\sin\theta$ et l'autre à $\cos\theta$. Ces deux signaux, qui ont la même fréquence, sont ensuite traités par la jonction hybride 3dB-90° pour donner deux nouveaux signaux, de même amplitude et de même fréquence, mais dont l'un est déphasé de $\theta$ et l'autre de $-\theta$ (à une constante près) par rapport à une phase de référence commune arbitraire. Par conséquent, la différence de phase des deux signaux varie linéairement avec $\theta$ et vaut sensiblement $2\theta$. Un écart de 1 degré sur l'angle $\theta$ se traduit donc par un écart de 2 degrés sur la phase différentielle. Inversement, une incertitude de 1 degré par exemple sur la mesure de la phase différentielle des deux signaux se traduit par 0,5 degré d'incertitude sur la localisation de la direction de propagation.

Comme on peut le constater, le système d'antenne de radiogoniométrie, objet de l'invention, travaille en temps réel, ce qui permet la localisation de signaux de courte durée pourvu que la chaîne de réception soit adaptée à ces impulsions. Cet avantage est dû au fait qu'il n'est pas nécessaire de commuter ni les éléments rayonnants ni les voies de réception pour extraire l'information angulaire désirée. Un autre avantage du système selon l'invention est de permettre la localisation d'une onde électromagnétique modulée en amplitude et/ou en phase sans faire appel à des antennes auxiliaires. Cet avantage vient de ce que le système de l'invention présente à tout instant deux signaux qui ont la même amplitude et dont la différence de phase est indépendante de la modulation de phase de l'onde incidente.

D'autre part, le système d'antenne selon l'invention est simple et robuste, ceci étant lié au peu de pièces mécaniques et au petit nombre de composants (diviseurs, jonction hybride) nécessaire à sa fabrication. Sa robustesse découle de l'absence de composants actifs (commutateurs par exemple) et du fait qu'aucune pièce mécanique mobile n'est utilisée.

Il faut noter, par ailleurs, que le système d'aérien conforme à l'invention, bien que de dimension modeste par rapport à la longueur d'onde, donne une bonne précision de localisation (hormis l'effet des interférences liées à l'environnement). Cet avantage se traduit par une incertitude de localisation typiquement égale à la moitié de l'incertitude instrumentale.

Enfin, un autre avantage du système d'antenne selon l'invention est de présenter une sensibilité équivalente à celle qu'on obtiendrait avec un élément rayonnant unique en réception, élément rayonnant de même type que ceux composant le réseau circulaire lui-même. Cet avantage vient de ce que le diagramme est omnidirectionnel et que le gain de l'antenne est de l'ordre ou supérieur à celui d'un élément rayonnant unique isolé.

Dans le cas d'une utilisation dans la gamme des basses fréquences, et en raison des multi-trajets, il y a intérêt à déployer plusieurs systèmes conformes à l'invention afin d'éliminer, moyennant un traitement adéquat, les ondes parasites d'interférence.

La description qui va suivre en regard des dessins annexés, donnés à titre d'exemples non limitatifs, fera bien comprendre en quoi consiste l'invention et comment elle peut être réalisée.

La figure 1a est une vue en perspective d'un système d'antenne de radiogoniométrie selon l'invention mettant en oeuvre des dipôles symétriques comme éléments rayonnants.

La figure 1b est une vue schématique de dessus du système d'antenne de la figure 1a.

La figure 2 est le schéma d'une unité de traitement du système d'antenne selon l'invention.

La figure 3a représente un diviseur de puissance par deux adapté utilisé dans l'unité de traitement de la figure 2.

La figure 3b représente une jonction hybride utilisée dans l'unité de traitement de la figure 2.

La figure 4 est un diagramme horizontal illustrant le fonctionnement de l'unité de traitement de la figure 2.

La figure 5 est un premier schéma de réalisation d'un système d'antenne selon l'invention.

La figure 6 est un deuxième schéma de réalisation d'un système d'antenne selon l'invention.

La figure 7 est une courbe de goniométrie obtenue à l'aide du système d'antenne selon l'invention.

La figure 8 est un diagramme horizontal d'un système d'antenne selon l'invention.

Les figures 9a et 9b sont des vues en perspective et de dessus d'un système d'antenne selon l'invention mettant en oeuvre des dipôles symétriques à réflecteurs dièdres.

La figure 10 est une vue en perspective d'un système d'antenne selon l'invention mettant en oeuvre des unipôles sur plateau réflecteur.

Les figures 11a et 11b sont des vues en perspective d'un système d'antenne selon l'invention mettant en oeuvre des unipôles à réflecteurs trièdres.

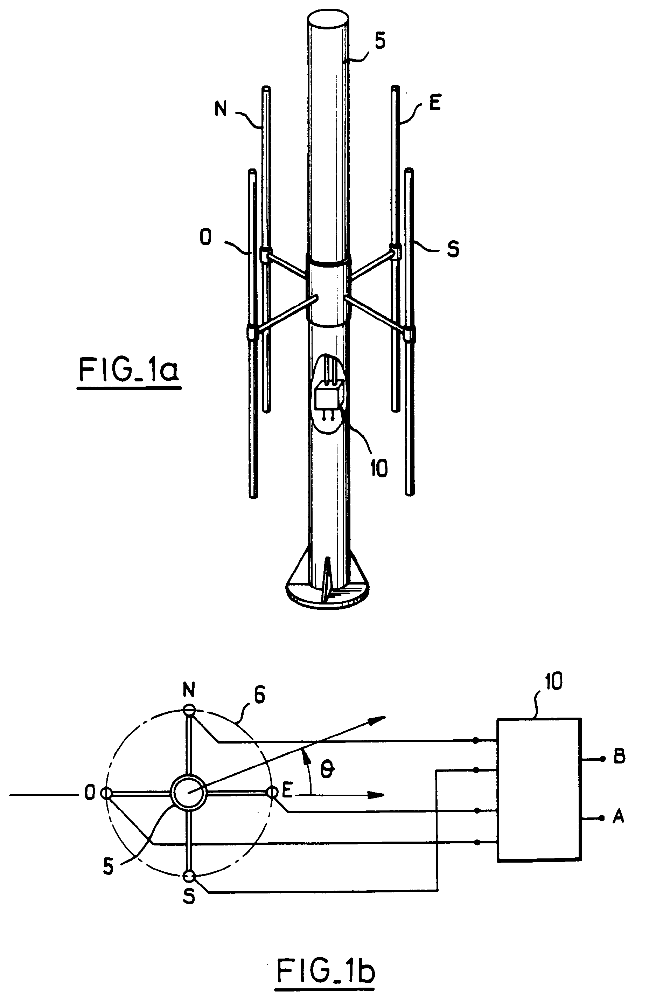

Le système d'antenne de radiogoniométrie représenté à la figure 1a comporte des éléments rayonnants constitués par quatre dipôles symétriques identiques notés E, N, O, S, répartis, ainsi que le montre la figure 1b, uniformément sur un cercle 6 autour d'un mât central conducteur 5.

Le diamètre du mât métallique 5 n'a pas d'effet sensible sur les performances de l'antenne. Aussi, peut-il être plus ou moins important (rond ou carré) selon les contraintes mécaniques. Dans les gammes VHF et UHF, par exemple, le diamètre peut être de l'ordre de 150 mm, soit $0,05\lambda$ à $0,2\lambda$, $\lambda$ étant la longueur d'onde.

La hauteur totale du mât 5 portant à mi-hauteur le réseau des quatre dipôles doit être supérieure à la longueur des éléments rayonnants. Typiquement, cette longueur est de $0,7\lambda$ ou plus, soit 2,10 m à 100 MHz par exemple.

Le diamètre du réseau circulaire est un paramètre essentiel de la conception de l'antenne. Il doit être inférieur à la longueur d'onde pour un fonctionnement compatible avec le principe de goniométrie utilisé. Avantageusement, ce diamètre est inférieur à $0,75\lambda$ et, de préférence, il est compris entre $0,2\lambda$ et $0,6\lambda$. Il est choisi en fonction des éléments rayonnants et de la bande de fréquence de travail.

Les éléments rayonnants tels que les dipôles demi-onde classiques symétriques ou repliés (type "trombone" ou "folded"), les unipôles quart d'onde sur plateaux réflecteurs, les dipôles et unipôles à réflecteurs dièdres ou trièdres, sont des exemples non limitatifs d'éléments rayonnants possibles. Le choix de tels ou tels éléments rayonnants dépend de la gamme de fréquence, de la largeur de bande, ainsi que de l'environnement opérationnel du système d'antenne selon l'invention. Cependant, les dimensions et le type même des éléments rayonnants ne sont astreints qu'aux conditions suivantes :

- les éléments rayonnants sont de type peu directif en azimut,
- les éléments rayonnants sont à polarisation préférentielle verticale,
- les dimensions doivent être compatibles avec la mise en réseau circulaire de quatre éléments rayonnants.

Le système d'antenne des figures 1a et 1b est destiné à déterminer l'angle d'incidence θ (voir figure 1b) de la direction de propagation d'une onde électromagnétique plane avec une direction de référence, par exemple l'axe O-E.

Pour que le fonctionnement soit conforme au principe de goniométrie utilisé, les deux dipôles de chaque paire sont inversés l'un par rapport à l'autre. Cette inversion qui peut être obtenue mécaniquement ou électriquement, a pour effet de créer un déphasage de 180° entre les courants circulant sur les deux dipôles d'une même paire.

Comme le montrent les figures 1a et 1b, le système d'antenne, objet de l'invention, comporte une unité 10 de traitement des signaux fournis par les quatre dipôles E, N, O, S. Cette unité de traitement associée à l'antenne peut avoir la forme d'un circuit enfermé dans un petit boîtier métallique avec connecteurs, disposé soit à hauteur des éléments rayonnants et à l'intérieur du mât 5, soit à la base du mât. Toutefois, quelle que soit la localisation de l'unité 10 de traitement, la longueur des câbles reliant chaque dipôle à ladite unité de traitement devra être identique.

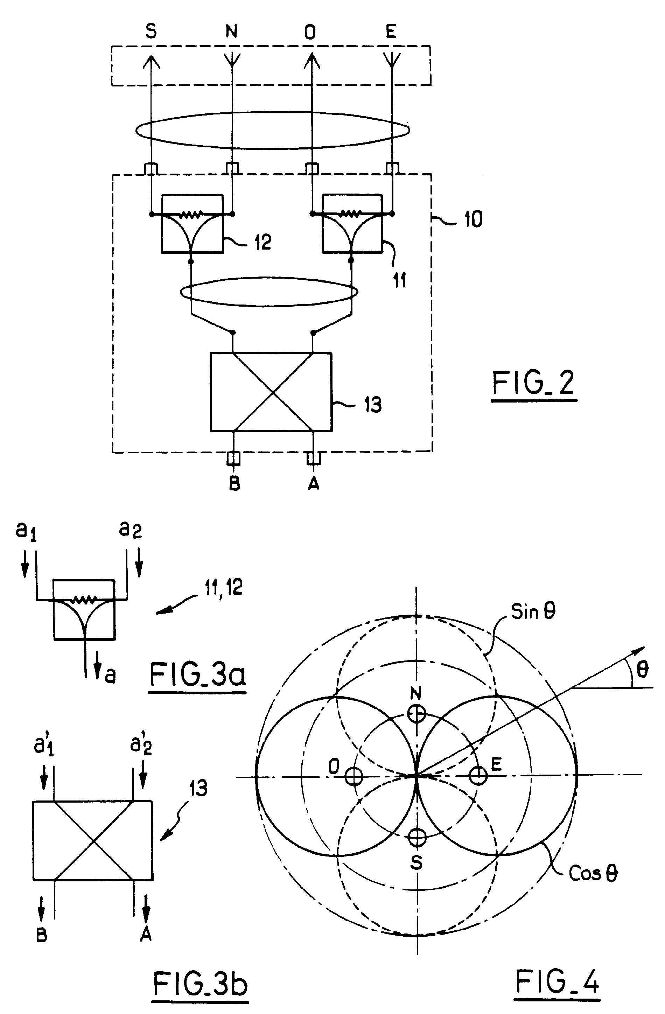

Conformément à la figure 2, l'unité 10 de traitement comprent un premier 11 diviseur de puissance par deux adapté recevant les signaux fournis par la première paire E-O de dipôles et un deuxième 12 diviseur de puissance par deux adapté, identique au premier, recevant les signaux fournis par la deuxième paire N-S de dipôles. Les deux lignes raccordant les deux diviseurs de puissance à la jonction hybride sont d'égales longueurs électriques.

Le terme de diviseur de puissance par deux adapté vient du fait que ce type de dispositif, utilisé en émission, fournit en sortie à deux charges identiques des puissances parfaitement équilibrées et qu'en outre les deux sorties sont radioélectriquement découplées l'une par rapport à l'autre de sorte que le dispositif est aussi un sommateur de signaux en mode réception.

Le diviseur 11, 12 de puissance par deux adapté représenté sur la figure 3a fonctionne de la manière suivante : si a1 et a2 sont les signaux entrant, le signal de sortie est donné, en notation complexe habituelle, par :

$$a = (\frac{a1}{\sqrt{2}} + \frac{a2}{\sqrt{2}}) e^{-j\varphi_0}$$

où $\varphi_o$ est une phase arbitraire fixée par la technologie de réalisation du diviseur.

La jonction hybride 3dB-90° montrée à la figure 3b, appelée aussi coupleur 3dB, fournit deux signaux de sortie en réponse aux deux signaux d'entrée a1′ et a2′, à savoir, sur la sortie A :

$$(\frac{a2'}{\sqrt{2}} - j\frac{a1'}{\sqrt{2}}) e^{-j\varphi_1}$$

et sur la sortie B :

$$(\frac{a1'}{\sqrt{2}} - j\frac{a2'}{\sqrt{2}}) e^{-j\varphi_1}$$

$\varphi_1$ étant une autre phase arbitraire fixée par la technologie de réalisation du coupleur 3dB.

Dans la mesure où elles affectent tous les signaux de la même façon, les phases arbitraires $\varphi_0$ et $\varphi_1$ n'interviennent pas dans le résultat final. Aussi, dans le but de simplifier l'écriture, elles seront dans la suite prises égales à zéro.

Le signal sortant du premier 11 diviseur de puissance de la figure 2, provenant de la combinaison des signaux fournis par la première paire E-O de dipôles, est proportionnel à cosθ, tandis que le deuxième 12 diviseur de puissance délivre en sortie un signal proportionnel à sinθ par combinaison des signaux fournis par la deuxième paire N-S de dipôles. Ces deux signaux, proportionnels respectivement à sinθ et cosθ, ont par ailleurs la même fréquence. Le diagramme de la figure 4 illustre sur le plan horizontal les réponses directionnelles de chaque paire de dipôles à une onde électromagnétique plane d'incidence θ. Les cercles en traits pointillés correspondent au signal en sinθ issus de la paire N-S, et les cercles en trait continu sont associés au signal en cosθ fournis par la paire E-O.

Revenant à la figure 2, la jonction hybride 13 délivre en sortie deux signaux qui en A est proportionnel à :

$$\cos\theta - j \sin\theta = e^{-j\theta}$$

et en B, le signal est proportionnel à :

$$\sin\theta - j \cos\theta = e^{j(\theta - \frac{\pi}{2})}$$

Ces deux signaux ont donc la même amplitude et sont représentés à la figure 4 par le même cercle de rayon 1 en trait mixte.

La différence $\Delta\varphi$ des phases $\varphi_B$ et $\varphi_A$ des deux signaux issus de la jonction hybride vaut donc :

$$\Delta\varphi = \varphi_B - \varphi_A = 2\theta - \frac{\pi}{2}$$

Le système d'antenne selon l'invention fournit ainsi un moyen d'obtenir deux signaux dont la différence de phase est linéaire par rapport à l'angle d'incidence θ cherché. De plus, comme l'indique la figure 4, le système est totalement omnidirectionnel.

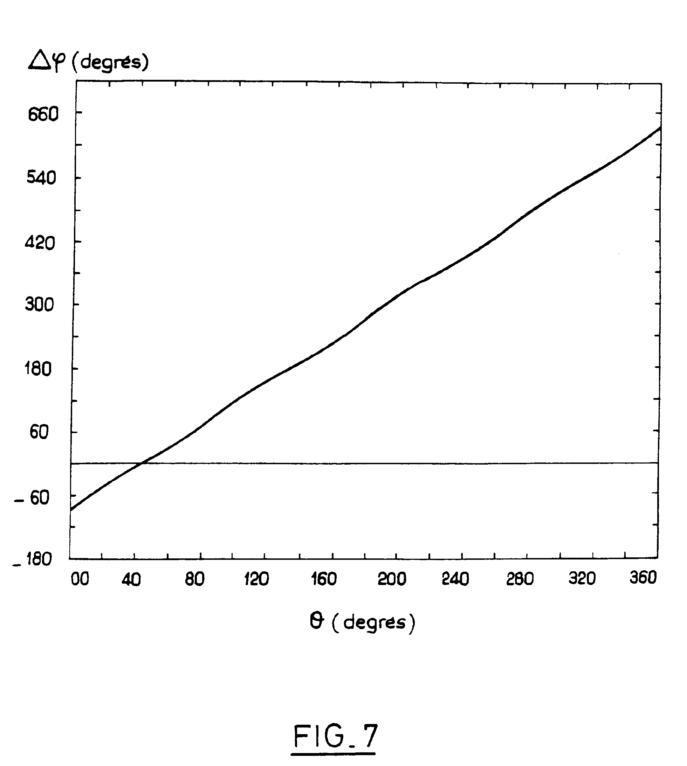

La courbe de goniométrie $\Delta\varphi(\theta)$ est donnée à la figure 7 à titre d'exemple. Cette courbe est une droite de pente 2, à laquelle est superposée une ondulation régulière de faible amplitude correspondant à l'erreur ε de non-linéarité de phase, le déphasage exact étant égal à :

$$\Delta\varphi = 2(\theta + \varepsilon) - \frac{\pi}{2}$$

Cette erreur ε de non-linéarité de phase est une fonction périodique de θ, de période 90° et d'amplitude de 4° environ pour l'exemple considéré. Elle est d'autant plus faible que le diamètre du réseau de dipôles est petit. Mais, en aucun cas, cette erreur n'est gênante car, comme on le verra plus loin, elle fait partie intégrante de l'étalonnage du processeur de goniométrie.

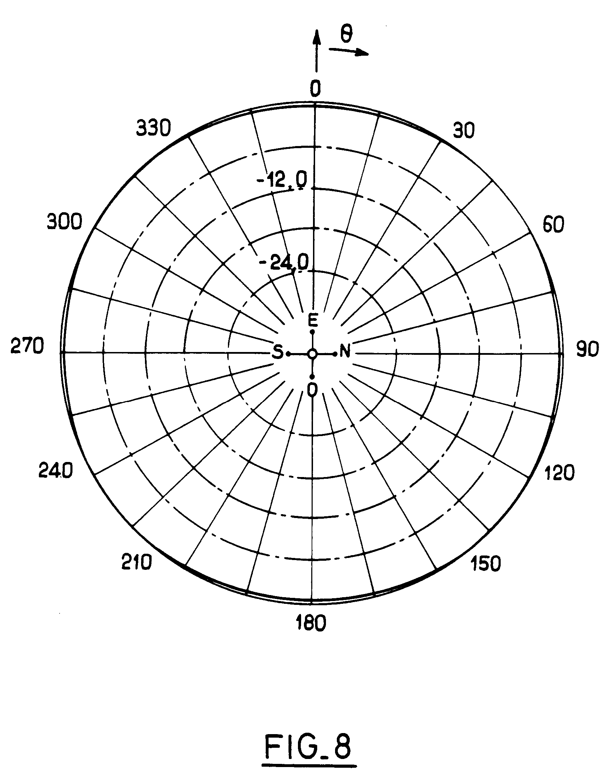

La figure 8 montre le diagramme horizontal à site nul de chacune des sorties A et B de l'unité 10 de traitement. Le diagramme est omnidirectionnel à ± 0,3 dB près, et il est identique pour les deux sorties A et B. Il a été obtenu avec une antenne fonctionnant dans la gamme VHF d'un diamètre voisin de 0,28 λ et comportant quatre dipôles demi-onde autour d'un mât de 0,15 m de diamètre. Le résultat illustré à la figure 7 correspond à cette configuration dimensionnelle.

Il faut également remarquer que le système d'antenne conforme à l'invention n'est pas sensible à la polarisation horizontale de l'onde incidente, ce qui aurait pour résultat, dans le cas contraire, si elle est élevée, de déformer la droite de goniométrie. La discrimination de polarisation de l'antenne est supérieure à 25 dB pour une conception soignée de l'antenne.

D'autre part, la précision de localisation en azimut est peu sensible à l'angle de site de l'onde incidente. La bonne précision est conservée jusqu'à des sites élevés et elle n'est en fait limitée que par la perte de sensibilité liée à l'atténuation du signal reçu à des sites élevés, atténuation variant comme le carré du sinus de l'angle d'élévation.

Enfin, la phase différentielle $\Delta\varphi$ des deux sorties A et B étant indépendante de la modulation de l'onde incidente, il n'est pas besoin d'un signal de référence issu d'une autre antenne pour éliminer cette modulation.

De façon pratique, les composants de l'unité 10 de traitement peuvent être à base de matériau ferrite dans les gammes HF, VHF voire UHF pour des raisons de compacité, ou à base de technologie micro-ruban dans les plus hautes gammes de fréquence.

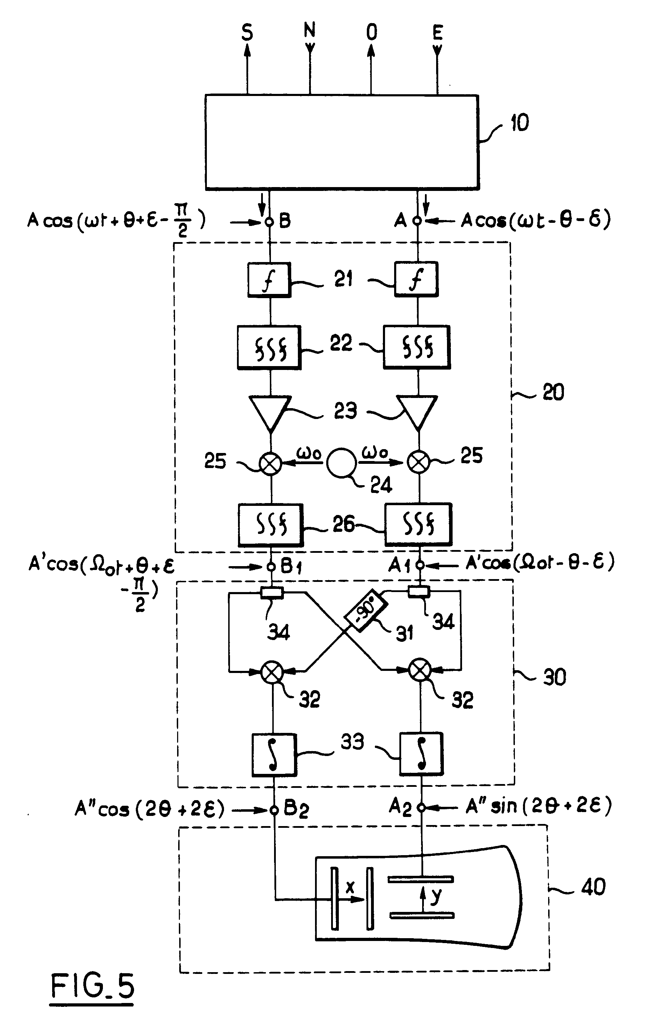

L'exemple de réalisation de la figure 5 montre, à la suite de l'unité 10 de traitement, un circuit récepteur 20 des signaux de même amplitude délivrés sur les bornes A et B par l'unité 10 de traitement. Chacune des voies de réception comporte un limiteur 21, un filtre passe-bande 22, un amplificateur 23 de signal, un mélangeur 25 couplé à un oscillateur local 24 destiné à abaisser la fréquence des signaux de $\omega$ à $\Omega_o = \omega - \omega_o$, et un filtre passe-bas 26 destiné à éliminer la raie à $\omega + \omega_o$.

Les deux signaux sortant du circuit récepteur 20 au niveau des bornes $A_1$ et $B_1$ sont ensuite traités par un résolveur 30 sinus-cosinus permettant, grâce à deux diviseurs 34, à un déphaseur 31 et à deux détecteurs cohérents 32 identiques suivis de deux intégrateurs 33 de disposer en $A_2$ et $B_2$ de deux signaux continus proportionnels, l'un au cosinus et l'autre au sinus de l'angle de déphasage entre les signaux issus de l'antenne.

Les deux signaux de sortie du résolveur 30 sont appliqués sur les plaques d'un tube cathodique pour visualiser directement et en temps réel l'angle d'incidence $\theta$ (modulo $\pi$) moyennant un étalonnage du système complet.

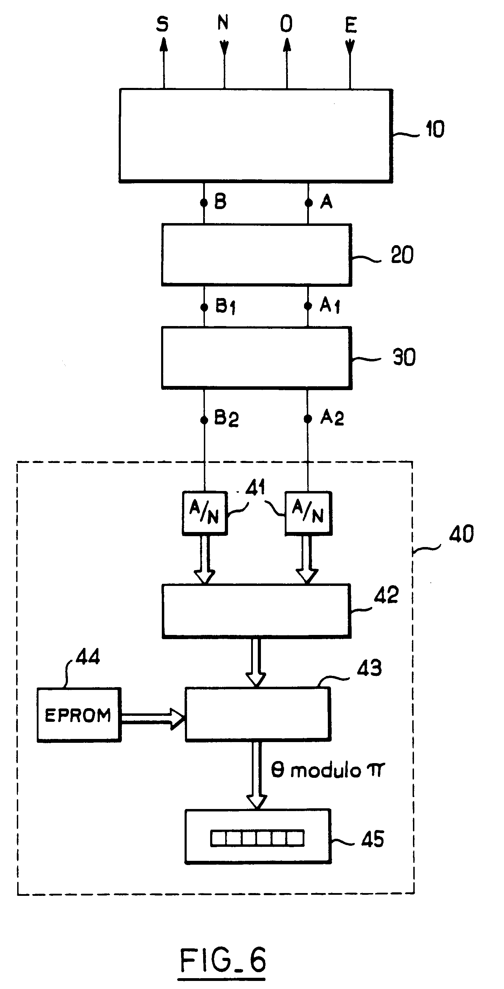

Le deuxième mode de réalisation illustré par la figure 6 repose sur un traitement numérique des signaux issus du résolveur 30 par un processeur 40 de goniométrie comportant deux convertisseurs analogique-numérique 41 qui appliquent à un calculateur 42 les signaux ainsi numérisés afin de déterminer leur déphasage. La valeur de ce déphasage est comparée par un comparateur numérique 43 à la courbe de goniométrie étalon du système complet, préalablement stockée dans une mémoire non volatile 44. Cette comparaison fournit l'angle $\theta$ exact (modulo $\pi$) dont la valeur est affichée sur un afficheur 45. Le terme afficheur désigne tout dispositif de visualisation de la grandeur $\theta$, y compris une unité graphique.

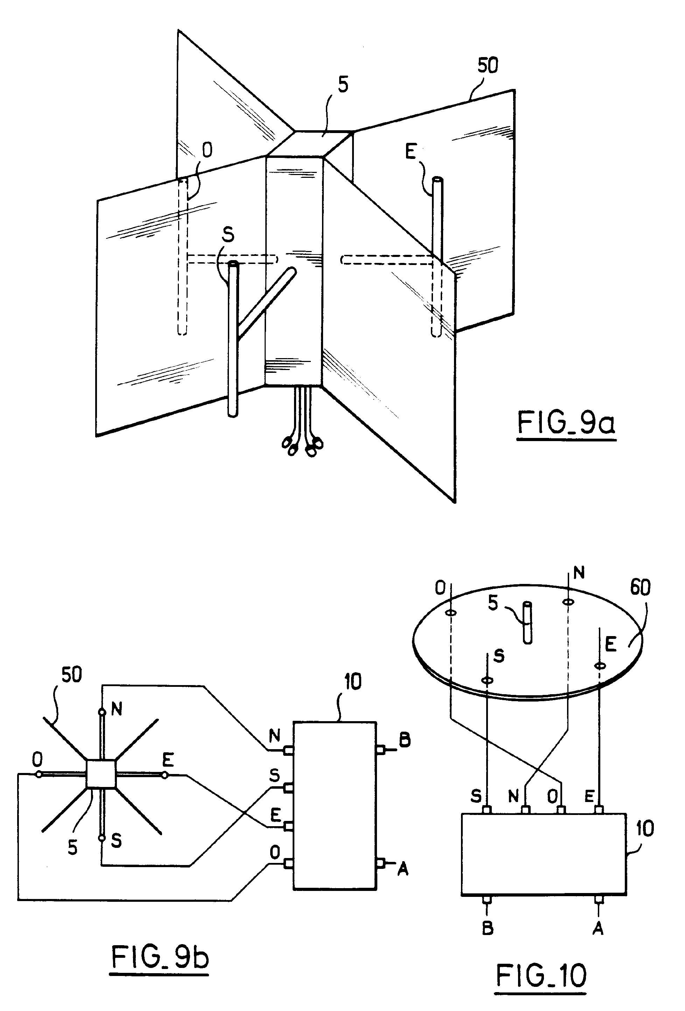

Les figures 9a et 9b montrent des éléments rayonnants constitués par des dipôles symétriques E, N, O, S séparés par des réflecteurs 50 formant des dièdres rectangles. Ce type d'antenne est utilisé préférentiellement pour des applications au sol dans la gamme UHF. La longueur des bras de liaison entre les dipôles et le mât 5 varie entre 0,2 $\lambda$ et 0,3 $\lambda$. La longueur des séparateurs 50 ne doit pas être trop grande pour assurer l'omnidirectionnalité ; elle est choisie typiquement entre 0,4 $\lambda$ et 0,5 $\lambda$. Quant à la hauteur des séparateurs 50, elle doit être supérieure à celle des dipôles, soit 0,6 $\lambda$ à 0,7 $\lambda$.

L'antenne de la figure 10 est composée d'éléments rayonnants ayant la forme d'unipôles quart d'onde disposés sur un plateau réflecteur 60 autour du mât central 5 selon un cercle ayant, comme pour les dipôles de la figure 1a, un diamètre de 0,2 $\lambda$ à 0,6 $\lambda$. Cette antenne est destinée à être embarquée principalement sur un aéronef. Sa fréquence typique de travail se situe dans la bande L.

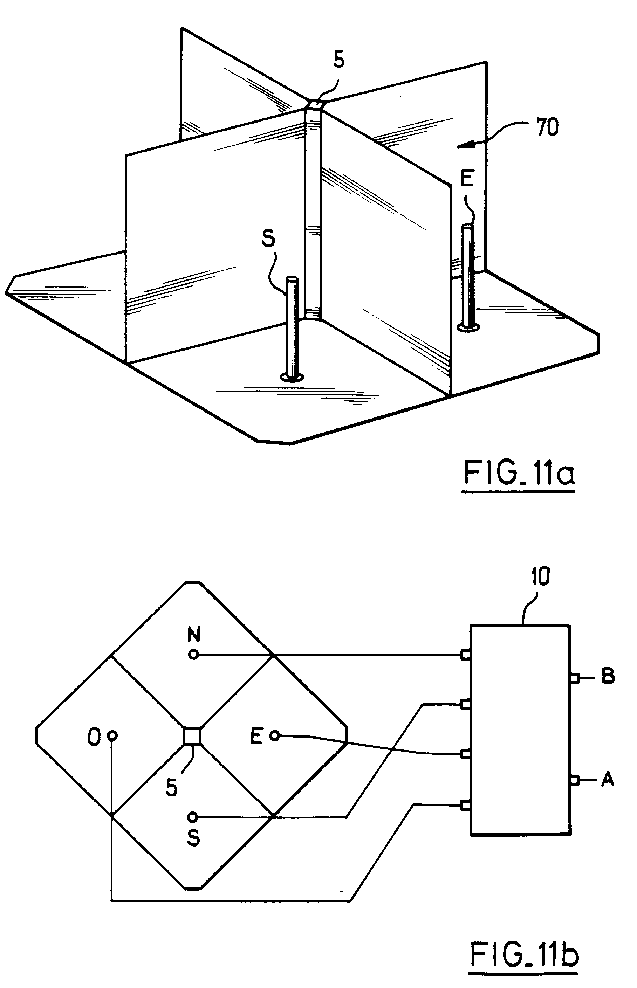

Enfin, les figures 11a et 11b montrent une antenne selon l'invention formée par quatre unipôles placés à l'intérieur de trièdres trirectangles 70. Toutes les faces des trièdres sont des carrés identiques de 0,4 $\lambda$ de côté environ. Ce type d'antenne est utilisé pour des applications au sol ou sur un véhicule, dans les gammes UHF et VHF.

Il est bien entendu que le système d'antenne décrit peut fonctionner de façon tout à fait équivalente en émission afin de produire des ondes électromagnétiques ayant des propriétés d'amplitude et de phase équivalentes au fonctionnement à la réception dans une direction $\theta$ donnée.

## Revendications

1. Système d'antenne de radiogoniométrie comportant quatre éléments rayonnants identiques (E, N, O, S) répartis uniformément sur un cercle (6) autour d'un mât conducteur (5), et destiné à déterminer l'angle d'incidence ($\theta$) de la direction de propagation d'une onde électromagnétique plane avec une direction de référence (O-E), caractérisé en ce que lesdits éléments rayonnants sont associés en une première (E-O) et une deuxième (N-S) paires de deux éléments rayonnants opposés et inversés l'un par rapport à l'autre, et en ce que ledit système d'antenne comporte une unité (10) de traitement comprenant, d'une part, un premier (11) diviseur de puissance par deux adapté recevant les signaux déphasés de 180° fournis par la première paire (E-O) déléments rayonnants sur ses sorties divisées et un deuxième (12) diviseur de puissance par deux adapté, identique au premier (11), recevant les signaux déphasés de 180° fournis par la deuxième paire (N-S) d'éléments rayonnants sur ses sorties divisées, et d'autre part, une jonction hybride (13) du type 3dB-90° recevant les signaux délivrés par les sorties non-divisées desdits diviseurs de puissance par deux adaptés, et fournissant en sortie deux signaux dont la différence de phase est donnée par $2\,\theta - \dfrac{\pi}{2}$ à une constante près.

2. Système d'antenne selon la revendication 1, caractérisé en ce qu'il comporte à la suite de ladite unité (10) de traitement, un circuit récepteur (20) destiné à abaisser la fréquence des deux signaux délivrés par la jonction hybride (13), un résolveur (30) donnant, à partir des signaux issus du circuit récepteur, deux signaux continus proportionnels respectivement au cosinus et au sinus de ladite différence de phase, et un processeur (40) de goniométrie.

3. Système d'antenne selon la revendication 2, caractérisé en ce que ledit processeur (40) de goniométrie est constitué par un tube cathodique permettant de visualiser l'angle ( θ ) cherché moyennant un étalonnage préalable.

4. Système d'antenne selon la revendication 2, caractérisé en ce que ledit processsur (40) de goniométrie comporte un calculateur (42) fournissant une valeur de ladite différence de phase, un comparateur (43) de cette valeur à une courbe goniométrique étalon stockée dans une mémoire non volatile (44), et un afficheur (45) de la valeur de l'angle (θ) d'incidence cherché.

5. Système d'antenne selon l'une quelconque des revendications 1 à 4, caractérisé en ce que le diamètre du cercle (6) est inférieur à 0,75 λ, λ étant la longueur d'onde de ladite onde électromagnétique plane.

6. Système d'antenne selon l'une quelconque des revendications 1 à 5, caractérisé en ce que lesdits éléments rayonnants sont des dipôles symétriques.

7. Système d'antenne selon la revendication 6, cartactérisé en ce que lesdits dipôles sont séparés par des réflecteurs (50) formant dièdres rectangles.

8. Système d'antenne selon l'une quelconque des revendications 1 à 5, caractérisé en ce que lesdits éléments rayonnants sont des unipôles sur plateau réflecteur (60).

9. Système d'antenne selon la revendication 8, caractérisé en ce que lesdits unipôles sont disposés à l'intérieur de trièdres trirectangles (70).

**Patentansprüche**

1. Funkpeilantennensystem, welches vier identische strahlende Elemente (E, N, O, S) umfaßt, die gleichmäßig auf einem Kreis (6) um einen leitenden Mast (5) verteilt sind, und welches dafür vorgesehen ist, den Einfallswinkel (Θ) zwischen der Propagationsrichtung einer ebenen elektromagnetischen Welle und einer Referenzrichtung (O-E) zu bestimmen, dadurch gekennzeichnet, daß die strahlenden Elemente zu einem ersten (E-O) und einem zweiten (N-S) Paar aus zwei strahlenden Elementen, die einander gegenüberliegen und zueinander invertiert sind, zusammengefaßt sind und daß das Antennensystem eine Verarbeitungseinheit (10) umfaßt, die zum einen einen ersten angepaßten Leistungsteiler zum Teilen durch zwei, der die um 180° phasenverschobenen Signale an seinen geteilten Ausgängen empfängt, die von dem ersten Paar (E-O) von strahlenden Elementen geliefert werden, und einen zweiten (12) angepaßten Leistungsteiler zum Teilen durch zwei, der identisch mit dem ersten (11) ist und die um 180° phasenverschobenen Signale an seinen geteilten Ausgängen empfängt, die von dem zweiten Paar (N-S) von strahlenden Elementen geliefert werden, und zum anderen eine 3dB-90°-Verzweigung (13) umfaßt, welche Signale empfängt, die von den nicht geteilten Ausgängen der angepaßten Leistungsteiler zum Teilen durch zwei geliefert werden, und am Ausgang zwei Signale abgibt, deren Phasendifferenz bis auf eine Konstante durch $2{\cdot}\theta - \pi/2$ gegeben ist.

2. Antennensystem nach Anspruch 1, dadurch gekennzeichnet, daß es nach der Verarbeitungseinheit (10) einen Empfangskreis (20), der dafür vorgesehen ist, die Frequenz der zwei von der Verzweigung (13) abgegebenen Signale herabzusetzen, einen Koordinatenwandler (30), welcher ausgehend von den von dem Empfangskreis abgegebenen Signalen zwei Dauersignale abgibt, die proportional zu dem Kosinus bzw. Sinus der besagten Phasendifferenz sind, und einen Goniometrieprozessor (40) enthält.

3. Antennensystem nach Anspruch 2, dadurch gekennzeichnet, daß der Goniometrieprozessor (40) durch eine Kathodenstrahlröhre gebildet wird, die es gestattet, den gesuchten Winkel (θ) mittels einer vorherigen Eichung sichtbar zu machen.

4. Antennensystem nach Anspruch 2, dadurch gekennzeichnet, daß der Goniometrieprozessor (40) einen Rechner (42), der einen Wert der besagten Phasendifferenz liefert, einen Vergleicher (43) zum Vergleichen dieses Wertes mit einer goniometrischen Eichkurve, die in einem nichtflüchtigen Speicher (44) gespeichert ist, und ein Anzeigegerät (45) zum Anzeigen des Wertes des gesuchten Einfallswinkels (θ) umfaßt.

5. Antennensystem nach einem der Ansprüche 1 bis 4, dadurch gekennzeichnet, daß der Durchmesser des Kreises (6) kleiner als 0,75·λ ist, wobei λ die Wellenlänge der ebenen elektromagnetischen Welle ist.

6. Antennensystem nach einem der Ansprüche 1 bis 5, dadurch gekennzeichnet, daß die strahlenden Elemente symmetrische Dipole sind.

7. Antennensystem nach Anspruch 6, dadurch gekennzeichnet, daß die Dipole durch Reflektoren (50) getrennt sind, die rechtwinklige Dieder bilden.

8. Antennensystem nach einem der Ansprüche 1 bis 5, dadurch gekennzeichnet, daß die strahlenden Elemente Einpole auf einer Reflektorplatte (60) sind.

9. Antennensystem nach Anspruch 8, dadurch gekennzeichnet, daß die Einpole im Inneren von Triedern mit drei rechten Winkeln (70) angeordnet sind.

**Claims**

1. A radio direction finding antenna system including four identical radiating elements (E, N, W, S) uniformly distributed on a circle (6) around a conductive mast (5) and designed to determine the angle of incidence (θ) of the propagation direction of a plane electromagnetic wave relative to a reference direction (W-E), the antenna system being characterized in that said radiating elements are associated in first and second pairs (E-W, N-S) of opposite radiating elements in which the elements are inverted relative to each other, and in that said antenna system includes a processor unit (10) comprising firstly a first matched power halver (11) receiving the 180° out of phase signals provided by the first pair (E-W) of radiating elements on the halved outputs and a second matched power halver (12) identical to the first (11) and receiving the 180° out of phase signals provided by the second pair (N-S) of radiating elements on the halved outputs, and secondly a 3 dB - 90° type hybrid junction (13) receiving the signals delivered by the non-halved outputs of said matched power halvers and providing two output signals at a phase difference of 2θ - $\frac{1}{2}\pi$ (modulo a constant).

2. An antenna system according to claim 1, characterized in that after said processor unit (10), the system includes a receiver circuit (20) for lowering the frequency of each of the two signals delivered by the hybrid junction (13), a resolver (30) responsive to the two signals from the receiver circuit to provide two DC signals respectively proportional to the cosine and to the sine of said phase difference, and a radio direction finding processor (40).

3. An antenna system according to claim 2, characterized in that said radio direction finding processor (40) is constituted by a cathode ray tube suitable, after prior calibration, for displaying the looked-for angle (θ).

4. An antenna system according to claim 2, characterized in that said radio direction finding processor (40) comprises a computer (42) delivering a value for said phase difference, a comparator (43) for comparing said value to a calibrated radio direction finding curve stored in non-volatile memory (44), and a display (45) for displaying the value of the looked-for angle of incidence (θ).

5. An antenna system according to any one of claims 1 to 4, characterized in that the diameter of the circle (6) is less than 0.75 λ, where λ is the wavelength of said plane electromagnetic wave.

6. An antenna system according to any one of claims 1 to 5, characterized in that said radiating elements are symmetrical dipoles.

7. An antenna system according to claim 6, characterized in that said dipoles are separated by reflectors (50) constituting rectangular V-shapes.

8. An antenna system according to any one of claims 1 to 5, characterized in that said radiating elements are unipoles on a reflecting surface (60).

9. An antenna system according to claim 8, characterized in that said unipoles are disposed inside rectangular corner reflectors.

FIG. 1a

FIG. 1b

S    N    O    E

## FIG_2

a₁   a₂

11,12

↓ a

## FIG.3a

a'₁   a'₂

13

B    A

## FIG.3b

## FIG_4

FIG.5

S   N   O   E

10

B   A

20

B₁   A₁

30

B₂   A₂

A/N   41   A/N

40

42

44

EPROM   43

θ modulo π

45

FIG_6

$\triangle \varphi$ (degrés)

$\theta$ (degrés)

FIG. 7

## FIG.8

FIG_9a

FIG_9b

FIG_10

FIG. 11a

FIG. 11b

15